Europäisches Patentamt

(19) European Patent Office

Office européen des brevets

(11) Numéro de publication: **0 176 434
B1**

(12) ## FASCICULE DE BREVET EUROPEEN

(45) Date de publication du fascicule du brevet:
05.07.89

(51) Int. Cl.⁴: **H 02 H 3/027, E 05 B 65/36**

(21) Numéro de dépôt: **85401813.2**

(22) Date de dépôt: **18.09.85**

(54) **Dispositif de commande de condamnation des portières et autres panneaux mobiles d'un véhicule automobile.**

(30) Priorité: **20.09.84 FR 8414466**

(43) Date de publication de la demande:
**02.04.86 Bulletin 86/14**

(45) Mention de la délivrance du brevet:
**05.07.89 Bulletin 89/27**

(84) Etats contractants désignés:
**DE GB IT SE**

(56) Documents cités:
**DE-A- 2 757 246
GB-A- 2 114 645
GB-A- 2 138 484**

(73) Titulaire: **ECIA - EQUIPEMENTS ET COMPOSANTS POUR L'INDUSTRIE AUTOMOBILE, F-25400 Audincourt (Doubs) (FR)**

(72) Inventeur: **Rudi, Alain, 2 rue Collin, F-90000 Essert (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

La présente invention est relative aux dispositifs de commande de condamnation des portières et autres panneaux mobiles d'un véhicule automobile et se rapporte plus particulièrement à un circuit de commande de condamnation centralisé.

On connaît des dispositifs de commande de verrouillage centralisés du type à moteur électrique combiné avec un dispositif anti-vol.

Les condamnations centralisées de portières, coffre et trappe à essence d'un véhicule automobile sont réalisées à l'aide d'actionneurs et d'une carte électronique de commande.

Cette fonction bien connue fait appel à une électronique traditionnelle et est protégée par un fusible thermique non réarmable.

Il arrive parfois que ce fusible disjoncte normalement à la suite d'une série de réglages trop répétitifs lors du montage sur un véhicule, ce qui nécessite alors une réparation.

Le GB 2 138 484 est relatif à une installation de commande centralisée de verrouillage de portières de véhicule qui comporte des moteurs électriques dont l'alimentation est assurée par des moyens de changement de polarité comportant des relais associés à des commutateurs respectifs, ces dispositifs fonctionnant tour à tour selon que les moteurs doivent être alimentés pour tourner dans une sens de rotation ou dans l'autre.

L'excitation des relais est commandée par des étages qui sont déclenchés alternativement en fonction de la position de commutateurs à commande manuelle pour provoquer respectivement le fonctionnement des moteurs dans le sens de la condamnation ou dans le sens de la décondamnation.

L'installation comporte en outre un dispositif de sécurité contre les surcharges comportant un intégrateur qui empêche le maintien en marche des moteurs qui ne sont pas conçus pour un fonctionnement de longue durée. Ce circuit d'intégration comporte un condensateur connecté aux bornes d'alimentation des moteurs en série avec une résistance et avec des diodes dont les anodes sont reliées aux contacts mobiles des commutateurs.

Une résistance de décharge est connectée en parallèle sur le condensateur. Ce dispositif de sécurité est complété par un comparateur à hystérésis dont la borne inverseuse est connectée à la borne du condensateur opposée à la masse et dont la borne non inverseuse est connectée à la jonction de deux résistances formant diviseur de tension, l'ensemble étant complété par une résistance de contre-réaction connectée entre la sortie du comparateur et le point précité.

Le fonctionnement du système est tel que lorsque la tension de sortie du comparateur atteint une première valeur, elle provoque le coupure de l'alimentation de l'un des bobinages de relais et par conséquent l'arrêt des moteurs. Ensuite, il y a abaissement de la tension à l'entrée inverseuse du comparateur par l'intermédiaire de la résistance de décharge du condensateur jusqu'à ce que la tension de sortie du comparateur atteigne de nouveau une valeur pour rendre conducteur le circuit de commande selon le cas et provoquer à nouveau l'alimentation du relais correspondant et par conséquent la mise en route des moteurs.

Cependant, ce dispositif ne préserve pas les moteurs d'une alimentation prolongée.

L'invention vise à remédier à cet inconvénient en créant un dispositif de commande de condamnation centralisé qui tout en évitant l'emploi d'un fusible thermique, soit d'un fonctionnement sûr et permette d'éviter toute détérioration des moteurs électriques d'entraînement du dispositif.

Elle a donc pour objet un dispositif centralisé de commande de condamnation des portières, coffre, trappe à essence ou autres panneaux mobiles d'un véhicule automobile comprenant un circuit de commande d'actionneurs desdits panneaux comprenant des commutateurs d'interruption de l'alimentation des actionneurs en cas d'anomalie, actionnés par des relais dont l'excitation des bobinages est commandée par des transistors associés à ces circuits de détection de l'état de parties correspondantes du circuit de commande centralisée, un circuit électronique d'inhibition du circuit de commande lorsque le temps d'alimentation des actionneurs par l'intermédiaire desdits commutateurs dépasse une valeur prédéterminée, le circuit électronique d'inhibition comportant des moyens de détection de l'état des sorties du circuit de commande des actionneurs et des moyens sensibles à la durée des signaux apparaissant aux sorties du circuit de commande des actionneurs pour maintenir le circuit de commande des actionneurs à l'état actif tant que les signaux apparaissant aux sorties du circuit de commande des actionneurs ne dépassent pas une durée prédéterminée, caractérisé en ce que lesdits moyens sensibles à la durée sont connectés aux transistors de commande des bobinages de relais par l'intermédiaire de moyens d'application de signaux de déclenchement auxdits transistors de commande lorsque la durée desdits signaux apparaissant à l'une au moins des sorties du circuit de commande des actionneurs dépasse une durée prédéterminée.

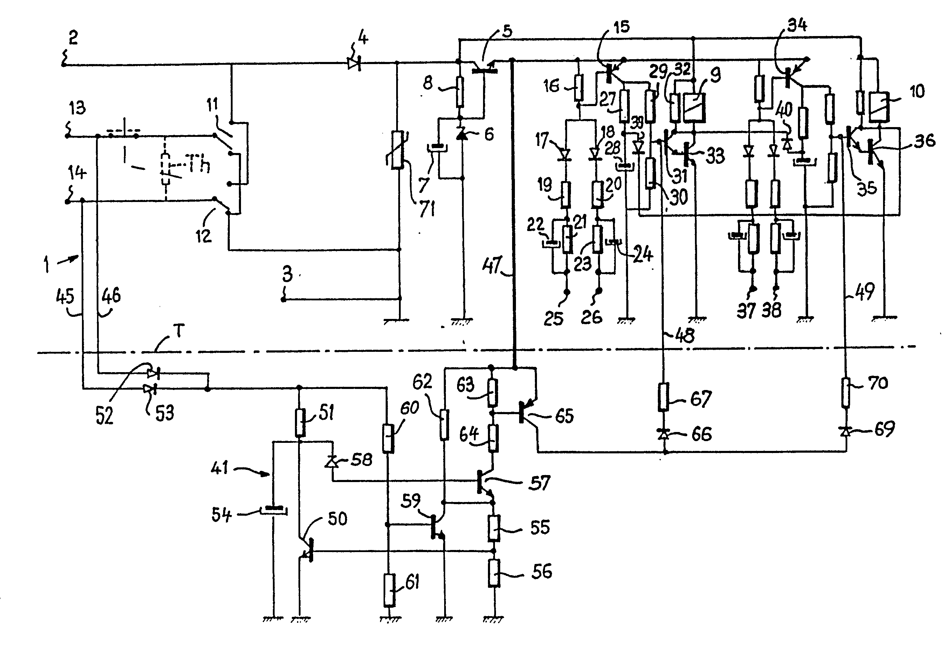

L'invention sera mieux comprise à la lecture de la description qui va suivre, faite en référence au dessin annexé, donné uniquement à titre d'exemple et sur lequel:

– la Fig. unique est un schéma électrique du dispositif de commande centralisé suivant l'invention.

La partie supérieure de cette figure délimitée par le trait mixte T reproduit le schéma d'une carte électronique 1 de commande de condamnation centralisée.

Les cartes réalisées jusqu'à ce jour comportent généralement un fusible thermique Th dont l'emplacement est représenté en pointillé et que l'invention se propose de supprimer.

La carte de commande 1 comporte une borne 2 destinée à être connectée à la borne positive de la batterie d'alimentation du véhicule, non représentée.

La carte 1 comporte en outre une borne négative 3 qui constitue le moins de la batterie et qui est connectée à la masse.

La borne positive 2 de la carte est connectée par l'intermédiaire d'une diode 4 au trajet collecteur-émetteur d'un transistor 5 dont la base est connectée à la masse par l'intermédiaire d'une diode Zener 6 sur laquelle est branché en parallèle un condensateur 7. Le collecteur et la base du transistor 5 sont réunis par une résistance 8. L'émetteur du transistor 5 qui est du type NPN est relié à deux circuits de commande de bobines de relais 9, 10 d'actionnement de commutateurs 11, 12 dont les contacts mobiles sont connectés respectivement à des bornes 13, 14 qui constituent des sorties auxquelles sont destinées à être reliés des actionneurs non représentés constitués par des moteurs électriques à double sens de rotation. Les circuits de commande des bobines de relais 9, 10 étant identiques, un seul d'entre eux sera décrit en détail.

Le circuit de commande de la bobine 9 comporte un transistor PNP 15 dont l'émetteur est connnecté à l'émetteur du transistor 5. La base du transistor 15 est reliée à l'émetteur du transistor 5 par l'intermédiaire d'une résistance 16 ainsi qu'à deux circuits constitués chacun par une diode 17, 18 en série avec une première résistance 19, 20 et avec un circuit RC 21, 22, 23, 24. La connexion entre chaque résistance 21, 23 et son condensateur correspondant 22, 24 opposés à la connexion du circuit RC à la résistance 19, 20 de chacun de ces circuits forme une borne 25, 26 de détection de l'état d'une portion correspondante du circuit de commande centralisée et dont la mise à la masse constitue une action de commande du circuit.

Le collecteur du transistor 15 est connecté à la masse par l'intermédiaire d'une résistance 27 en série avec un condensateur 28. Aux bornes de la résistance 27 et du condensateur 28 est connecté un diviseur de tension formé de deux résistances 29, 30.

La jonction entre les résistances 29 et 30 est connectée à la base d'un transistor 31 de type NPN dont le collecteur est connecté par une résistance 32 au collecteur du transistor 5 et dont l'émetteur est connecté à la base d'un transistor de sortie de type NPN 33. L'émetteur de ce transistor est connecté à la masse tandis que son collecteur est connecté à la bobine de relais 9 ainsi qu'au collecteur du transistor 31.

Le circuit de commande de la bobine de relais 10 est réalisé au moyen de trois transistors 34, 35, 36 connectés de la même manière que les transistors 15, 31 et 33 du circuit de commande de la bobine 9. Il comporte lui aussi des circuits connectés à la base du transistor 34 analogues à ceux connectés à la base du transistor 15 et dont les jonctions entre la résistance et le condensateur de chaque circuit RC forment aussi des bornes 37, 38 de détection de l'état d'une portion du circuit de commande centralisée et dont la mise à la masse constitue une action de commande. Une diode 39 est connectée entre le point de jonction de la résistance 27 et du condensateur 28 branchée à la sortie du transistor 15 d'une part, et le collecteur du transistor 36 d'autre part. Une diode correspondante 40 est connectée entre le point de jonction de la résistance et du condensateur correspondants connectés à la sortie du transistor 35 d'une part et le collecteur du transistor 33 d'autre part.

L'action sur les points 25, 26, 37 ou 38 est traduite à la mise en conduction des transistors 31 ou 35 pendant environ 0,5 seconde, ce qui provoque la connexion à la borne positive 2 des commutateurs 11 ou 12 sous la commande des bobines de relais 9 ou 10.

Le fusible thermique Th utilisé dans les installations antérieures est constitué par une résistance chauffante qui provoque l'ouverture d'un contact associé représenté en pointillé sur la figure, si l'action sur les commutateurs 11 ou 12 se prolonge au-delà d'une valeur prédéterminée, de 30 secondes par exemple, ou bien si la répétition d'actions successives provoque le même échauffement. Bien que ce fusible antérieur protège les actionneurs contre un défaut de commande ou un collage mécanique de l'un des contacts isolés, sa détérioration constitue une panne réelle qui, comme indiqué plus haut, nécessite une réparation, ce qui est un inconvénient important, en particulier lorsque la panne intervient au moment du montage du dispositif de commande sur un véhicule en cours de construction.

En conséquence, suivant l'invention, il est proposé de remplacer ce fusible thermique par un fusible électronique désigné par la référence générale 41 et occupant la partie de la figure située au-dessous du trait mixte T. Le circuit 45 est relié au circuit 1 par des connexions de liaison 45 à 49 dont il sera question par la suite.

Le circuit 41 comporte un premier transistor 50 du type NPN dont l'émetteur est relié à la masse et dont le collecteur est connecté par l'intermédiaire d'une résistance 51 et de deux diodes 52 et 53 aux conducteurs 46 et 45 de liaison avec les bornes de sortie 13 et 14 du circuit 1. En parallèle sur le trajet collecteur émetteur du transistor 50 est connecté un condensateur 54. La base du transistor 50 est reliée à un point de jonction entre deux résistances 55, 56 reliant à la masse l'émetteur d'un transistor NPN 57 dont la base est à son tour reliée au collecteur du transistor 50 par l'intermédiaire d'une diode Zener 58. L'émetteur du transistor 57 est en outre connecté au collecteur d'un transistor 59 dont la base est reliée au point de jonction de deux résistances 60 et 61 qui relient la jonction des diodes 52 et 53 à la masse. Le collecteur du transistor 59 est connecté par l'intermédiaire d'une résistance 62 à deux résistances 63, 64 branchées en série au collecteur du transistor 57. La jonction entre les résistances 63 et 64 est connectée à la base d'un transistor NPN 65 dont l'émetteur est relié au conducteur 47 de liaison avec l'émetteur du transistor 5 du circuit 1. La-jonction entre les résistances 62 et 63 est en outre connectée au conducteur de liaison 47.

Le collecteur du transistor 65 est connecté par l'intermédiaire d'une diode 66 et d'une résistance 67 en série au conducteur 48 de liaison avec la base du transistor 31 du circuit 1. Il est en outre connecté par l'intermédiaire d'une diode 69 et d'une résistance 70 en série à la base du transistor 35 du circuit 1.

Le principe retenu pour la protection est d'assurer automatiquement l'excitation de la bobine de relais 9 ou de la bobine de relais 10 dans le cas où le premier contact 11 ne serait pas retombé après une période de temps prédéterminée de fonctionnement normal dont la durée serait de 0,5 seconde par exemple, soit en raison d'un défaut de la commande, soit du fait de l'apparition d'un défaut mécanique engendré par le coincement d'une palette, d'une mauvaise soudure des contacts ou autre.

L'information est prise aux bornes de sortie 13, 14 et additionée par les diodes 52 et 53.

Dans le cas d'un fonctionnement sans défaut, cette information provoque la charge lente du condensateur 54 par la résistance 51, le transistor 50 étant bloqué et le condensateur 54 étant déchargé au départ. Simultanément, le transistor 59 est rendu conducteur par la résistance 60 qui transmet à la base de celui-ci le signal provenant des diodes 52 et 53. On voit ainsi que le potentiel sur l'émetteur du transistor 57 est voisin de la masse, ce qui assure effectivement le blocage du transistor 50, car sa base reliée à la jonction de résistance 55 et 56 se trouve elle aussi pratiquement au potentiel de la masse. La durée des informations normales est au plus égale à 0,5 seconde. Le potentiel sur le collecteur du transistor 50 évolue lentement et s'il n'atteint pas une valeur suffisante, le transistor 57 ne peut être rendu conducteur grâce à la présence de la diode Zener 58 qui fixe une valeur de seuil. Le transistor 57 n'étant pas conducteur, le potentiel de la base du transistor 65 ne peut être que celui de son émetteur et il reste donc bloqué. Il n'y a donc aucun courant dans les branches 66, 67, 48 et 69, 70, 49.

Lorsque l'information en provenance des bornes 13 et 14 de sortie du circuit 1 cesse sur les conducteurs de liaison 45 et 46, le transistor 59 cesse de conduire et qui a pour effet d'amener le potentiel de l'émetteur du transistor 57 à une valeur suffisante pour que le transistor 50 soit rendu conducteur en raison de la tension appliquée à sa base par le diviseur de tension 55, 56. Le transistor 50 étant conducteur, le potentiel sur son collecteur devient celui de la masse et le condensateur 54 se décharge brutalement par le trajet collecteur-émetteur du transistor 50.

Le dispositif étant revenu à son état initial, le cycle peut recommencer.

En cas d'actions successive et répétée, parfois nécessaire pour assurer le réglage d'un actionneur, il n'y a donc pas de disjonction intempestive.

Lors de l'existence d'un défaut, le fonctionnement des dispositifs suivant l'invention est le suivant.

Le défaut dangereux pour les actionneurs est la non retombée de l'un des contacts 11 ou 12 pendant une durée supérieure à la durée permise, c'est-à-dire 0,5 seconde dans le présent exemple.

Dans un tel cas, l'information de conduction est maintenue sur l'un des conducteurs de liaison 45 ou 46 et transmise par l'une des diodes 53 ou 52, ce qui amène, en raison de la charge progressive du condensateur 54, le potentiel du collecteur du transistor 50 à une valeur suffisante au seuil de la diode Zener 58, pour que le transistor 57 devienne conducteur au bout d'un intervalle de temps de l'ordre de 4 à 5 secondes.

Le potentiel sur l'émetteur du transistor 57 étant déjà voisin de la masse, car le transistor 59 est déjà conducteur, on voit que le transistor 65 est également rendu conducteur par la résistance 64. Ce dernier transistor porte alors à un potentiel suffisant les bases des transistors 31 et 35 par les trajets 66, 67, 48 et 69, 70, 49 et provoque donc l'excitation des bobines 9 et 10, et de ce fait la mise au plus des bornes 13 et 14. Les potentiels aux bornes des actionneurs branchés entre les bornes 13 et 14 deviennent donc égaux, ce qui assure leur protection.

Le circuit électronique reste donc dans cet état jusqu'à ce qu'une intervention soit assurée pour le dépannage.

Si le défaut a été uniquement passager (par exemple, le coincement mécanique d'une palette mobile de contact de relais, facilement réparée par un léger choc), la carte électronique est remise dans son état initial opérationnel simplement en débranchant son alimentation un instant à la borne 2. Dans ce cas, la panne est donc mineure et ne nécessite pas le changement de cette carte.

Le circuit comporte enfin une varistance 71 branchée directement à l'entrée du circuit 1 et assurant la protection contre les parasites de ligne.

## Revendications

1. Dispositif centralisé de commande de condamnation des portières, coffre, trappe à essence ou autres panneaux mobiles d'un véhicule automobile comprenant un circuit (1) de commande d'actionneurs desdits panneaux comprenant des commutateurs (11, 12) d'interruption de l'alimentation des actionneurs en cas d'anomalie, actionnés par des relais dont l'excitation des bobinages est commandée par des transistors (31, 35) associés à des circuits (15 à 26, 34 à 38) de détection de l'état de parties correspondantes du circuit de commande centralisée, un circuit électronique (41) d'inhibition du circuit de commande (1) lorsque le temps d'alimentation des actionneurs par l'intermédiaire desdits commutateurs (11, 12) dépasse une valeur prédéterminée, le circuit électronique d'inhibition (41) comportant des moyens (52, 53) de détection de l'état des sorties (13, 14) du circuit de commande des actionneurs et des moyens (50, 51, 54, 57, 59) sensibles à la durée des signaux apparaissant aux sorties (13, 14) du circuit de commande des actionneurs pour maintenir le circuit de commande des actionneurs à l'état actif tant que les signaux apparaissant aux sorties (13, 14) du circuit de commande des actionneurs ne dépassent pas une durée prédéterminée, caractérisé en ce que lesdits moyens sensibles à la durée sont connectés aux transistors (31, 35) de commande des bobinages de relais (9, 10) par l'intermédiaire de moyens (65, 66, 67; 69, 70) d'application de signaux de déclenchement auxdits transistors de commande qui provoquent la mise au plus des bornes (13, 14) des actionneurs lorsque la durée desdits signaux apparaissant à l'une au moins des sorties (13, 14) du circuit de commande des actionneurs dépasse une durée prédéterminée.

2. Dispositif suivant la revendication 1, caractérisé en ce que lesdits moyens sensibles à la durée des signaux apparaissant aux sorties (13, 14) du circuit de commande des actionneurs comprennent un condensateur (54) et une résistance (51) connectés en série sur lesdites sorties (13, 14), un premier transistor (50) normalement bloqué et dont la conduction est destinée à provoquer la décharge brusque du condensateur (54) lors de la disparition normale des signaux auxdites sorties (13, 14), ledit premier transistor (50) étant connecté à un second transistor (57) de commande des moyens (65, 66, 67, 69, 70) d'application des signaux de déclenchement auxdits transistors (31, 35) de commande de l'excitation des bobinages de relais (9, 10) en cas de persistance desdits signaux auxdites sorties (13, 14) au-delà d'un intervalle de temps prédéterminé.

3. Dispositif suivant l'une des revendications 1 et 2, caractérisé en ce qu'entre le premier transistor (50) et le second transistor (57) est interposé un élément à seuil (58) destiné à empêcher la mise en conduction du second transistor (57) lorsque la valeur de la tension aux bornes du condensateur (54) est inférieure à une valeur prédéterminée, un troisième transistor (59) étant prévu pour provoquer la conduction du premier transistor (50) lors de la disparition des signaux aux sorties (13, 14) du circuit de commande des actionneurs.

4. Dispositif suivant l'une des revendications 1 à 3, caractérisé en ce que ledit troisième transistor (59) est connecté aux bornes d'un diviseur de tension (55, 56) branché en série avec le trajet émetteur-collecteur du second transistor (57), ledit diviseur de tension étant destiné à déclencher la conduction du premier transistor (50) lors du blocage du troisième transistor (59).

5. Dispositif suivant l'une des revendications 1 à 4, caractérisé en ce que lesdits moyens d'application de signaux de déclenchement aux transistors (31, 35) de commande des bobinages de relais (9, 10) comprennent un quatrième transistor (65) connecté dans le circuit de charge du troisième transistor et dont la conduction déclenchée par ce dernier est destinée à provoquer le déclenchement desdits transistors (31, 35) de commande des bobinages de relais (9, 10).

## Patentansprüche

1. Zentrale Steuervorrichtung zum Verriegeln der Türen, des Kofferraumes, des Tankverschlusses und anderer beweglicher Platten eines Kraftfahrzeuges mit einer Steuerschaltung (1) für Betätiger der besagten Platten mit Umschaltern (11, 12) zum Unterbrechen der Speisung der Betätiger im Falle einer Abweichung, wobei die Umschalter durch Relais betätigt werden, bei denen die Erregung der Wicklung durch Transistoren (31, 35) gesteuert wird, die mit Schaltungen (15–26, 34–38) zum Detektieren des Zustandes von entsprechenden Teilen der zentralen Steuervorrichtung zusammenwirken, und mit einer elektronischen Schaltung (41) zum Inhibieren der Steuervorrichtung (1), sofern die Zeit zur Speisung der Betätiger über die besagten Umschalter (11, 12) einen vorgegebenen Wert übersteigt, wobei die elektronische Inhibitionsschaltung (41) Mittel (52, 53) zum Detektieren des Zustandes der Ausgänge (13, 14) der Steuerschaltung der Betätiger und Mittel (50, 51, 54, 57 59) aufweist, die auf die Zeitdauer der an den Ausgängen (13, 14) der Steuerschaltung der Betätiger auftretenden Signale ansprechen, um die Steuerschaltung der Betätiger im aktiven Zustand zu halten, solange wie die an den Ausgängen (13, 14) der Steuerschaltung der Betätiger auftretenden Signale eine vorgegebene Zeitdauer nicht übersteigen, dadurch gekennzeichnet, dass die auf die Zeitdauer ansprechenden Mittel mit den Steuertransistoren (31, 35) der Wicklungen der Relais (9, 10) über Mittel (65, 66, 67; 69, 70) zum Anlegen von Auslösesignalen an die Steuertransistoren verbunden sind, die das Anlegen der Anschlüsse (13, 14) der Betätiger an Plus bewirken, sofern die Zeitdauer der an mindestens einem der Ausgänge (13, 14) der Steuerschaltung der Betätiger auftretenden Signale eine vorgegebene Zeitdauer übersteigt.

2. Vorrichtung nach Anspruch 1, dadurch gekennzeichnet, dass die auf die Zeitdauer der an den Ausgängen (13, 14) der Schaltung zum Steuern der Betätiger ansprechenden Mittel einen auf diese Ausgänge (13, 14) in Reihe geschalteten Kondensator (54) und einen Widerstand (51) und einen ersten Transistor (50) aufweisen, der normalerweise gesperrt ist und dessen leitender Zustand zum plötzlichen Entladen des Kondensators (54) bei normalem Verschwinden der Signale an den Ausgängen (13, 14) bestimmt ist, wobei der erste Transistor (50) an einen zweiten Transistor (57) angeschlossen ist zum Steuern der Mittel (65, 66, 67, 69, 70) zum Anlegen der Auslösesignale an die Transistoren (31, 35) zum Steuern der Erregung der Wicklungen der Relais (9, 10) im Falle eines Andauerns der besagten Signale an den Ausgängen (13, 14) über die vorbestimmte Zeitdauer hinaus.

3. Vorrichtung nach einem der Ansprüche 1 und 2, dadurch gekennzeichnet, dass zwischen dem ersten Transistor (50) und dem zweiten Transistor (57) ein Schwellenelement (58) zwischengeschaltet ist, das zum Verhindern des Umschaltens des zweiten Transistors (57) in den leitenden Zustand bestimmt ist, sofern der Betrag der Spannung an den Anschlüssen des Kondensators (54) unter einem vorgegebenen Betrag liegt, und ein dritter Transistor (59) vorgesehen ist, um den leitenden Zustand des ersten Transistors (50) bei einem Verschwinden der Signale an den Ausgängen (13, 14) der Steuerschaltung der Betätiger zu bewirken.

4. Vorrichtung nach einem der Ansprüche 1 bis 3, dadurch gekennzeichnet, dass der dritte Transistor (59) an die Anschlüsse eines mit dem Emitter-Kollektor-Pfad des zweiten Transistors (57) in Reihe liegenden Spannungsteilers (55, 56) angeschlossen ist und der Spannungsteiler zum Auslösen des leitenden Zustandes des ersten Transistors (50) bei einer Sperrung des dritten Transistors (59) bestimmt ist.

5. Vorrichtung nach einem der Ansprüche 1 bis 4, dadurch gekennzeichnet, dass die besagten Mittel zum Anlegen der Auslösesignale an die Transistoren (31, 35) zum Steuern der Wicklungen der Relais (9, 10) einen vierten Transistor (65) aufweisen, der im Ladekreis des dritten Transistors liegt und dessen durch den letzteren ausgelöster leitender Zustand dazu bestimmt ist, das Durchschalten der Transistoren (31, 35) zum Steuern der Wicklungen der Relais (9, 10) auszulösen.

**Claims**

1. A centralised device for controlling the locking of the doors, boot, petrol flap or other movable panels of a motor vehicle, comprising a circuit (1) for controlling the actuators of the said panels comprising switches (11, 12) for interrupting the power supply to the actuators in cases of anomalies, actuated by relays, the energization of whose coils is controlled by transistors (31, 35) associated with the circuits (15 to 26, 34 to 38) for detecting the state of the corresponding parts of the centralised control circuit, an electronic circuit (41) for inhibiting the control circuit (1) when the time of powering the actuators via the said switches (11, 12) exceeds a predetermined value, the electronic inhibiting circuit (41) comprising means (52, 53) for detecting the state of the outputs (13, 14) of the circuit controlling the actuators and means (50, 51, 54, 57, 59) sensing the duration of the signals appearing as the outputs (13, 14) of the circuit controlling the actuators, to maintain the circuit controlling the actuators in its active state as long as the signals appearing at the outputs (13, 14) of the circuit controlling the actuators do not exceed a predetermined period, characterized in that the said means sensing the duration are connected to transistors (31, 35) controlling the relay coils (9, 10) via the means (65, 66, 67, 69, 70) for applying the starting signals to the said control transistors which produce the setting to plus of the terminals (13, 14) of the actuators when the duration of the said signal appearing at at least one of the outputs (13, 14) of the circuit controlling the actuators exceeds a predetermined period.

2. A device according to claim 1, characterized in that the said means sensing the duration of the signals appearing at the outputs (13, 14) of the circuit controlling the actuators comprise a capacitor (54) and a resistor (51) connected in series to the said outputs (13, 14), a first transistor (50) normally blocked and whose conduction is intended to produce the sudden discharge of the capacitor (54) during the normal disappearance of the signals at the said outputs (13, 14), the said first transistor (50) being connected to a second transistor (57) controlling the means (65, 66, 67, 69, 70) for applying the starting signals to the said transistors (31, 35) controlling the energisation of the relay coils (9, 10), in case the said signals persist at the said outputs (13, 14) beyond a predetermined time interval.

3. A device according to one of claims 1 and 2 characterized in that a threshold element (58) is interposed between the first transistor (50) and the second transistor (57) which is intended to prevent the second transistor from becoming conductive when the value of the voltage at the terminals of the capacitor (54) is less than a predetermined value, provision being made for a third transistor (59) to cause the first transistor (50) to become conductive during the disappearance of the signals at the outputs (13, 14) of the circuit controlling the actuators.

4. A device according to one of claims 1 to 3, characterized in that the said third transistor (59) is connected to the terminals of a voltage divider (55, 56) connected in series to the emitter-collector path of the second transistor (57), the said voltage divider being intended to start the conduction of the first transistor (50) when the third transistor (59) is blocked.

5. A device according to one of claims 1 to 4, characterized in that the said means for applying the starting signals to the transistors (31, 35) controlling the relay coils (9, 10) comprise a fourth transistor (65) connected in the charging circuit of the third transistor and whose conduction started by the latter is intended to produce the triggering of the said transistors (31, 35) controlling the relay circuits (9, 10).

EP 0 176 434 B1